# EUROPÄISCHE PATENTSCHRIFT

(11) **EP 2 508 383 B1**
(45) Veröffentlichungstag und Bekanntmachung des Hinweises auf die Patenterteilung: **23.10.2013**
(21) Anmeldenummer: 12001688.6
(22) Anmeldetag: 13.03.2012
(51) Int. Cl.: B60K 35/00, B60K 37/06, H01H 9/18, G09F 9/00, G09F 19/12, B60Q 1/00, G02B 6/00, G09F 13/18

(54) **Leuchtanzeige zur Darstellung eines dreidimensionalen Objekts**
Light display for depicting a three-dimensional object
Affichage lumineux pour la représentation d'un objet en trois dimensions

(30) Priorität: 06.04.2011 DE 102011016228
(43) Veröffentlichungstag der Anmeldung: 10.10.2012
(73) Patentinhaber: AUDI AG, 85045 Ingolstadt (DE)
(72) Erfinder: Schwab, Tobias, 85080 Gaimersheim (DE); Berlitz, Stephan, 86529 Schrobenhausen (DE)
(74) Vertreter: Thielmann, Frank

(56) Entgegenhaltungen:
- DE-A1-102006 003 174
- DE-A1-102006 017 067
- DE-U1- 20 218 291
- DE-U1- 29 917 623
- DE-U1-202009 010 133
- US-A- 2 560 117

## Beschreibung

Die Erfindung betrifft eine Leuchtanzeige zur Darstellung eines dreidimensionalen Objekts, umfassend ein das Objekt enthaltendes Anzeigeelement, in dem die Information bei Einkopplung von Licht sichtbar wird.

Eine Leuchtanzeige mit den Merkmalen des Oberbegriffs des Anspruchs 1 ist aus der US-A-2 560 117 bekannt.

Leuchtanzeigen kommen in unterschiedlichsten Bereichen zum Einsatz, nämlich überall dort, wo eine Information angezeigt werden soll. Diese Information kann unterschiedlichster Art sein, es kann sich um eine Textinformation handeln, um ein Piktogramm oder Ähnliches. Die Leuchtanzeige kann als reine Informationsanzeige ausgeführt sein, die also lediglich zur Darstellung der Information dient, sie kann aber auch ein kombiniertes Bauteil sein, in dem der Leuchtanzeige eine zusätzliche Funktion oder zusätzliche Bauelemente zugeordnet sind, beispielsweise in Form einer Schaltereinheit, welche beispielsweise durch Berühren bedient werden kann. Über die Leuchtanzeige wird also eine bestimmte Information dargestellt, eine der Information zugeordnete Funktion kann sodann über die der Leuchtanzeige zugeordnete oder ihr zugehörige Schaltereinheit angewählt werden. Solche kombinierten Bauteile, vornehmlich in Form von Schaltern, kommen beispielsweise an Maschinen oder in Kraftfahrzeugen zum Einsatz, wo neben einer Informationsdarstellung gleichzeitig auch die Möglichkeit zur Anwahl bestimmter, der Information zugeordneter Funktionen oder Betriebselemente etc. möglich ist.

Lediglich beispielhaft sei der Kraftfahrzeugbereich erwähnt, wo beispielsweise am Armaturenbrett eine Reihe von Leuchtanzeigen vorgesehen sein kann, denen jeweils eine Schaltereinheit zugehörig ist. Die Leuchtanzeigen stellen beispielsweise drei unterschiedliche Funktionszustände der Außenbeleuchtung dar, beispielsweise über eine erste Leuchtanzeige das Standlicht, über eine zweite Leuchtanzeige das Abblendlicht und über eine dritte Leuchtanzeige das Fernlicht. Jeder einzelne Betriebsmodus kann nun vom Fahrer durch Berühren der Leuchtanzeige umfassend die Schaltfunktion angewählt werden. Diese Aufzählung ist lediglich exemplarisch und keinesfalls beschränkend.

Üblicherweise bestehen Leuchtanzeigen, vornehmlich solche mit zugeordneter Schaltfunktion, wie sie beispielsweise im Kraftfahrzeug verbaut sind, aus einem Kunststoffteil, an dem lichtoptisch insoweit transparent ein Symbol ausgebildet ist, beispielsweise durch Verwendung eines entsprechend transparenten Kunststoffs, welches mittels einer integrierten Lichtquelle hinterleuchtet wird und folglich, wenn die Lichtquelle an ist, wahrgenommen werden kann. Bekannt ist es aber auch, die Leuchtanzeige zur Darstellung eines dreidimensionalen Objekts, welches die Information, die visualisiert werden soll, darstellt, auszugestalten. Dieses Objekt wird sichtbar, wenn über eine Lichtquelle Licht in das Anzeigeelement, das dieses Objekt enthält, eingekoppelt wird, das Objekt "schwebt" dann quasi in dem Anzeigeelement und ist als dreidimensionale Information sichtbar. Ein solches Anzeigeelement, das diese dreidimensionale Objektinformationsdarstellung ermöglicht, besteht aus einem vollständig durchsichtigen Glaskörper, der im Inneren mittels eines Lasers gezielt "verletzt" wird, mithin also die Glasstruktur gezielt lokal verändert wird. Diese Veränderung wird im gesamten Bereich durchgeführt, der das Objekt bildet, was mittels eines Lasers durch entsprechende Ansteuerung möglich ist. Durch diese gezielte Veränderung der Glasstruktur verändert sich lokal im Bereich der Grenzfläche zwischen "unverletztem" Glas und "verletztem" Glas das Reflexionsverhalten. Das Glas insgesamt, also das Anzeigeelement selbst, bleibt im unbeleuchteten Zustand durchsichtig, das heißt, dass der "verletzte" Bereich, also das dreidimensionale Informationsobjekt selbst, ohne Lichteinkopplung nicht sichtbar ist. Erst wenn Licht eingekoppelt wird, wird die Objektinformation sichtbar, da sich an der Grenzfläche infolge der Strukturveränderung das eingekoppelte Licht bricht respektive reflektiert wird und so das dreidimensionale Objekt sichtbar wird, es "schwebt" quasi im Inneren des Anzeigeelements.

Die Ausbildung des Objekts im Inneren des Anzeigeelements, also die lokale Veränderung der Glasstruktur, ist bei einem Anzeigeelement aus Glas mittels eines Lasers möglich, da es trotz Einkopplung der Energie des Laserlichts zur Strukturveränderung nicht zu einer Veränderung der grundsätzlichen Transparenz respektive Durchsichtigkeit des gesamten Anzeigeelements kommt. Da aber in vielen Bereichen der Technik, wo Leuchtanzeigen der in Rede stehenden Art eingesetzt werden können, Glasbauteile nicht gewünscht sind, insbesondere beispielsweise im Kraftfahrzeug, scheidet folglich ein entsprechender Einsatz aus.

Der Erfindung liegt damit das Problem zugrunde, eine Leuchtanzeige anzugeben, die trotz gegebener Möglichkeit zur Darstellung eines dreidimensionalen Objekts breitbandig eingesetzt werden kann.

Zur Lösung dieses Problems ist bei einer Leuchtanzeige der eingangs genannten Art erfindungsgemäß vorgesehen, dass das dreidimensionale Objekt aus einem Licht zumindest teilweise reflektierendem ersten Kunststoff besteht und teilweise oder vollständig von einem Licht nicht reflektierenden zweiten Kunststoff umschlossen ist.

Die erfindungsgemäße Leuchtanzeige zeichnet sich durch ein Anzeigeelement aus, das vollständig aus Kunststoff besteht. Es kommen zwei Kunststoffe zum Einsatz, die sich in ihrem Reflexionsverhalten unterscheiden. Ein erster Kunststoff mit Licht zumindest teilweise reflektierender Eigenschaft bildet das dreidimensionale Objekt. Dieses dreidimensionale Objekt, das auch mehrteilig sein kann, ist nun erfindungsgemäß vom zweiten Kunststoff, der Licht nicht oder nur zu einem vernachlässigbaren Grad reflektiert, teilweise oder vollständig umschlossen, wobei der teilweise oder vollständige Einschluss an der Grenzfläche vollkommen luftspaltfrei gegeben ist. Im Fall eines teilweisen Einschließens kann z. B. das Objekt mit einer Seite vom zweiten Kunststoff flächig überdeckt sein, oder auch an mehreren Seiten. Im Fall einer vollständigen Einbettung ist das Objekt komplett luftspaltfrei im zweiten Kunststoff eingeschlossen. Der erste Kunststoff ist, soweit es seine reflektierende Eigenschaft zulässt, weitestgehend transparent, während der zweite Kunststoff gänzlich durchsichtig, das heißt, dass ohne separate, spezielle Lichteinkopplung der erste Kunststoff, mithin also das dreidimensionale Objekt, im Anzeigeelement nicht oder nahezu nicht sichtbar ist. Erst bei Einkopplung von Licht über eine externe Lichtquelle wird das Objekt sichtbar, da der erste Kunststoff, also das Objekt selbst, das eingestrahlte und den zweiten Kunststoff durchlaufende Licht reflektiert. Das Objekt wird als im Anzeigeelement "schwebend" sichtbar und zwar sowohl bei teilweisem als auch vollständigem Einschluss. Ohne gezielte Lichteinkopplung, also bei Umgebungslicht, ist das Anzeigeelement nahezu vollständig durchsichtig.

Die erfindungsgemäße Verwendung zweier Kunststoffe mit unterschiedlichen Reflexionsverhalten, die jedoch beide vollkommen oder weitestgehend transparent sind, lässt mit besonderem Vorteil auch die Herstellung eines Anzeigeelements und damit eine Leuchtanzeige aus Kunststoff zu. Denn eine Ausbildung des Objekts im Kunststoff mittels eines Lasers, wie dies bei einem Glaskörper möglich ist, ist bei einem Kunststoffkörper nicht möglich, denn dort kommt es an der "Verletzungsstelle" zu einem Anschmelzen oder Aufschmelzen des Kunststoffmaterials, resultierend aus der eingebrachten Laserlichtenergie, und daraus resultierend zu einem Verfärben des Kunststoffs und einem Verlust der Transparenz respektive Durchsichtigkeit. Das Objekt wäre also sichtbar. Werden jedoch zwei separate Kunststoffe verwendet, wobei der eine, das Objekt bildende Kunststoff teilweise oder vollständig im anderen Kunststoff eingeschlossen ist und ein anderes Reflexionsverhalten aufweist als der ihn umgebende zweite Kunststoff, ist eine quasi "induzierte" Verletzung respektive Brechungsindexveränderung nicht erforderlich, weshalb die Ausbildung des Anzeigeelements aus Kunststoff möglich ist. Dies wiederum ermöglicht es, die Leuchtanzeige auch in Bereichen zu verwenden, wo Glaselemente nicht möglich sind, beispielsweise im Bereich eines Kraftfahrzeugs. Beide Kunststoffe haben also denselben Brechungsindex, unterscheiden sich jedoch in ihrem Reflexionsverhalten.

Der erste und der zweite Kunststoff müssen soweit als möglich durchsichtig sein, was im Falle des zweiten Kunststoffs ohne weiteres möglich ist, und im Falle des ersten Kunststoffs davon abhängt, wie seine reflektierende Eigenschaft erzeugt ist. Zwar besteht grundsätzlich die Möglichkeit, verschiedenartige Kunststoffe, also unterschiedliche Kunststofftypen, zu verwenden, solange diese vollständig oder weitestgehend durchsichtig sind. Die Erfindung sieht demgegenüber jedoch vor, dass beide Kunststoffe aus demselben Grundmaterial bestehen, jedoch ein Grundmaterial zur Erzeugung seines Reflexionsverhaltens dotiert ist. Eine solche Dotierung des Grundmaterials erfolgt durch Zugabe von Dotierstoffen in Form von möglichst homogen verteilten Nanopartikeln, die das von Haus aus durchsichtige Grundmaterial gezielt "verunreinigen", so dass es ein mehr oder weniger stark ausgeprägtes Reflexionsvermögen im Material selbst besitzt, verglichen mit dem undotierten Grundmaterial. Bevorzugt wird das das Objekt bildende Grundmaterial dotiert. Die Transparenz des dotierten Materials hängt vom Grad der Dotierung ab, also vom Anteil der Nanopartikel am Gesamtvolumen des Grundmaterial. Der Nanopartikelanteil sollte möglichst niedrig sein, damit das Objekt selbst ohne spezielle Lichteinkopplung nicht oder kaum sichtbar ist, und erst bei gezielter Lichteinkopplung aufgrund der Reflexion durch die Nanopartikel auffallend sichtbar wird. Gleichzeitig sollte der Partikelanteil aber auch so groß sein, dass das Objekt bei gezielter Lichteinstrahlung ausreichend hell leuchtet und gut sichtbar ist.

Als Grundmaterial kann beispielsweise PMMA verwendet werden, also ein vollständig transparenter Kunststoff. Verwendet werden kann beispielsweise das PMMA "Plexiglas^{®} farblos" der Evonik Röhm GmbH als undotiertes PMMA, das beispielsweise das zweite Grundmaterial bildet, und das PMMA "Plexiglas^{®} EndLighten T", ebenfalls von der Evonik Röhm GmbH, das als dotiertes PMMA das Objekt bildet. In dieses dotierte PMMA sind farblose, lichtstreuende Partikel eingebettet, die, anders als im undotierten PMMA, das Licht durch Totalreflexion vollständig durchleitet, Licht streuen bzw. reflektieren und so die Sichtbarkeit des Objekts bei Lichteinkopplung bewirken.

Alternativ zur Verwendung von PMMA als Grundmaterial ist es auch denkbar, PC als Grundmaterial zu verwenden, wobei auch hier das eine Grundmaterial dotiert und das andere Grundmaterial undotiert ist.

Für den Fall, dass die Darstellung farbiger Information gewünscht wird, besteht die Möglichkeit, die Kunststoffe einzufärben, jedoch gleichzeitig ihre Transparenz zu erhalten. Das heißt, dass den Kunststoffen entsprechende Partikel zugemischt sind, die sie beispielsweise gelblich oder rötlich scheinen lassen. Nach wie vor sind sie jedoch durchsichtig.

Zusätzlich oder alternativ besteht die Möglichkeit, zur Darstellung von farbigen Informationen wenigstens eine farbige Lichtquelle vorzusehen, beispielsweise eine farbige LED, die Licht einkoppelt, so dass auch hierüber eine farbige Informationsdarstellung möglich ist.

Denkbar ist es in diesem Zusammenhang, wenigstens zwei Lichtquellen vorzusehen, von denen eine weißes Licht und die andere farbiges Licht emittiert, um sowohl eine Weißlichtdarstellung als auch eine Farblichtdarstellung, zu ermöglichen, je nachdem, welche Lichtquelle betrieben wird. Denkbar ist es aber natürlich auch, eine weißes Licht emittierende Lichtquelle und mehrere Lichtquellen, die unterschiedlich farbiges Licht emittieren, vorzusehen respektive deren Licht einzukoppeln. Beispielsweise kann neben einer weißen LED auch eine blaues Licht, eine rotes Licht und eine grünes Licht emittierende LED zugeordnet werden, so dass unterschiedliche Farbdarstellungen, gegebenenfalls auch Mischfarben, möglich sind.

Das Anzeigeelement selbst ist zweckmäßigerweise als kubischer Block ausgeführt, wobei das Licht an wenigstens einer Seite, insbesondere an zwei einander gegenüberliegenden Seiten, eingekoppelt wird. Das Licht kann von der oder den Lichtquellen beispielsweise unmittelbar eingekoppelt werden, das heißt, die Lichtquellen sind direkt benachbart zu den Flächen angeordnet. Denkbar ist es aber auch, das Licht beispielsweise über Lichtleiter an die Einkoppelflächen zu führen, wobei die Lichtleiter gegebenenfalls unmittelbar an den Einkoppelflächen angeordnet sind. Jedoch ist die Erfindung nicht auf die kubische Form des Anzeigeelements beschränkt. Vielmehr kann das Anzeigeelement beliebig geformt sein, solange es den erfindungsgemäßen Aufbau besitzt. Die Lichteinkoppelflächen müssen nicht eben sein, vielmehr können es beliebige Freiformflächen sein, solange eine Einkopplung von Licht möglich ist.

Darüber hinaus kann die Leuchteinrichtung auch eine Einrichtung zur Erfassung einer Annäherung an das oder einer Berührung des Anzeigeelements und zur Auslösung einer zugeordneten Schaltfunktion aufweisen. Das heißt, dass das Anzeigeelement mit einer entsprechenden Sensoreinrichtung ausgestattet ist oder beispielsweise mit einem nachgeschalteten Tastschalter verbunden ist, der betätigt wird, wenn auf das Anzeigeelement gedrückt wird und Ähnliches.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung einer ersten erfindungsgemäßen Leuchtanzeige,
- Fig. 2: eine vergrößerte Prinzipdarstellung eines Anzeigeelements der Leuchteinrichtung aus Fig. 1 ohne Lichteinkopplung, und
- Fig. 3: eine Darstellung des Anzeigeelements aus Fig. 2 bei Lichteinkopplung.

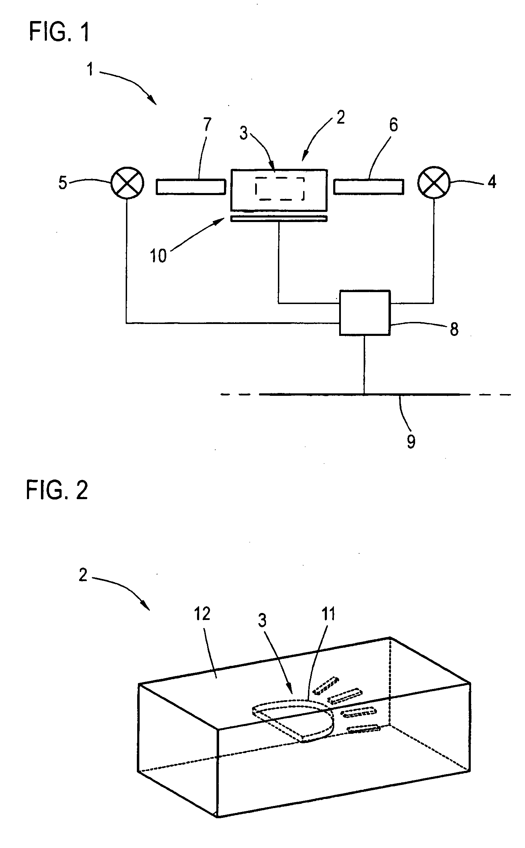

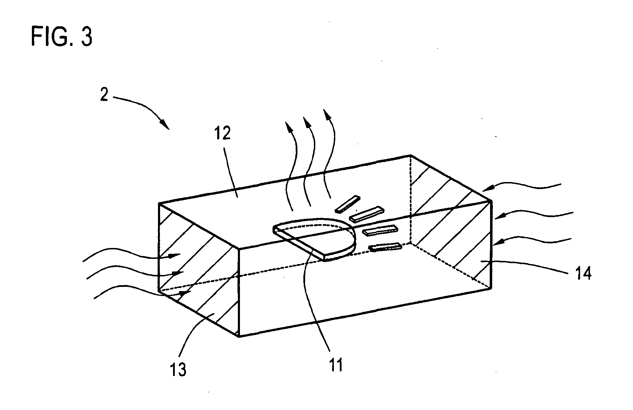

Fig. 1 zeigt eine erfindungsgemäße Leuchtanzeige 1, die zur Darstellung eines dreidimensionalen Objekts geeignet ist. Die Leuchtanzeige 1 nebst Leuchteinrichtung umfasst ein Anzeigeelement 2 aus Kunststoff, das im gezeigten Beispiel, siehe auch die Figuren 2 und 3, als einfacher kubischer Block ausgeführt ist. Anstelle der Blockform sind auch andere Formen mit beliebiger Geometrie und Freiformflächen denkbar. In dem Anzeigeelement 2 ist in seinem Inneren, im gezeigten Beispiel allseitig vollständig umschlossen, ein dreidimensionales Objekt 3 aufgenommen, das bei fehlender gezielter Lichteinkopplung nicht sichtbar ist, weshalb es in Fig. 1 nur gestrichelt gezeigt ist. Dieses Objekt 3 besteht aus einem ersten Kunststoff, es ist vollständig von einem zweiten Kunststoff umgeben, worauf nachfolgend noch im Detail eingegangen wird.

Dem Anzeigeelement 2 zugeordnet sind im gezeigten Beispiel zwei Lichtquellen 4, 5, die über jeweilige Lichtleiter 6, 7 lichtoptisch mit dem Anzeigeelement 2 verbunden sind, so dass von den Lichtquellen 4, 5, beispielsweise LEDs, emittiertes Licht über die Lichtleiter 6, 7 zum Anzeigeelement 2 geführt und dort an den Stirnflächen eingekoppelt werden kann. Bei Lichteinkopplung wird das dreidimensionale Objekt 3 sichtbar, worauf nachfolgend noch eingegangen wird. Die Lichtquellen 4, 5 können beispielsweise beide weißes Licht emittieren, denkbar ist es aber auch, dass die Lichtquelle 4 weißes Licht und die Lichtquelle 5 farbiges Licht, beispielsweise rotes Licht, emittiert, wie natürlich auch mehrere solcher Lichtquellen vorgesehen sein können, um zum einen die eingekoppelte Lichtmenge zu erhöhen, andererseits auch mehrere Farben mittels unterschiedlichen Farb-LEDs darzustellen. Die Ansteuerung der Lichtquellen 4, 5 erfolgt über eine Steuerungseinrichtung 8, die im gezeigten Beispiel an einen zentralen Bus 9, beispielsweise Teil eines Kraftfahrzeugs oder der allgemeinen Maschinensteuerung, angeordnet ist, wobei dies selbstverständlich rein optional ist.

Im gezeigten Ausführungsbeispiel nach Fig. 1 weist die Leuchtanzeige ferner eine zugeordnete Schaltereinrichtung 10 auf, das heißt, dass die Leuchteinrichtung 1 bzw. das Anzeigeelement 2 mit einer Schalterfunktion ausgerüstet ist. Diese Schaltereinrichtung 10 dient dazu, eine Annäherung oder Berührung bzw. Bewegung des Anzeigeelements 2, beispielsweise mittels eines Fingers durch den Fahrer des Kraftfahrzeugs, zu erfassen. Wird diese Annäherung/Berührung/Bewegung erfasst, so wird ein entsprechendes Signal an die Steuerungseinrichtung 8 gegeben, die sodann die Ansteuerung der zugeordneten Schaltfunktion, beispielsweise das Anschalten eines Abblend-oder Fernlichts oder Ähnliches im Kraftfahrzeug, auslöst. Die Schaltereinrichtung 10 kann folglich unterschiedlichster Natur sein, solange sie in der Lage ist, einen Schaltwunsch des Bedieners, der hierzu in irgendeiner Weise das Anzeigeelement 2 betätigt, zu erfassen.

Fig. 2 zeigt in einer vergrößerten Prinzipdarstellung das Anzeigeelement 2 aus Fig. 1. Dieses ist wie beschrieben als kubischer Kunststoffkörper ausgeführt. Im Inneren des Kunststoffkörpers befindet sich das dreidimensionale Objekt 3, das hier mehrteilig ist und in seiner Gesamtheit als Piktogramm eine Abblendlicht-Darstellung wiedergibt. Das dreidimensionale Objekt besteht aus einem ersten soweit als möglich durchsichtigen bzw. transparenten Kunststoff mit einem durch Dotierung mit Nanopartikeln erwirkten Reflexionsvermögen bzw. Lichtstreuvermögen. Verwendet wird hierzu bevorzugt ein Grundmaterial aus PMMA, das durch Zugabe geeigneter lichtstreuender Partikel dotiert ist. Ohne eingekoppeltes Licht jedoch ist das Objekt 3 nahezu oder vollständig durchsichtig und wird als solches innerhalb des Anzeigeelements 2 nicht sichtbar.

Das Objekt 3 aus dem dotierten PMMA-Grundmaterial ist in einem zweiten Kunststoff 12 vollständig luftspaltfrei aufgenommen respektive umschlossen. Dieses zweite Kunststoff 12 besteht aus demselben Grundmaterial, mithin also auch aus PMMA und ist folglich vollständig durchsichtig bzw. transparent. Jedoch ist dieses PMMA-Grundmaterial nicht dotiert, weist also keine entsprechenden das Lichtstreuverhalten variierender Zuschläge in Form von Nanopartikeln oder dergleichen auf. Das Anzeigeelement 2 ist folglich, da sowohl das Objekt 3 bestehend aus dem ersten Kunststoff 11 aus dotiertem PMMA-Grundmaterial und der zweite Kunststoff 12 bestehend aus undotiertem PMMA-Grundmaterial bei fehlender separater Lichteinkopplung transparent sind, durchsichtig, das Objekt ist ohne gezielte Lichteinkopplung nicht oder nahezu nicht sichtbar.

Fig. 3 zeigt nun das Anzeigeelement 2 aus Fig. 2, wenn über die Lichtquellen 4, 5 Licht in das Anzeigeelement 2 über die Stirnflächen 13, 14 eingekoppelt wird. Das eingekoppelte Licht wird infolge des unterschiedlichen Lichtstreuverhaltens des Kunststoffs 11 verglichen zu dem nicht-lichtstreuenden Kunststoff 12 am Objekt 3 gestreut, mithin also reflektiert. Dies führt dazu, dass das Objekt 3 als solches im Inneren des Anzeigeelements 2, also des Kunststoffblocks, sichtbar wird, es "schwebt" optisch in dem kubischen Anzeigeelement 2. Der Bediener kann das leuchtende Objekt 3 aufgrund der gegebenen Durchsichtigkeit respektive Transparenz des Kunststoffs 12 genauestens wahrnehmen und in seinem Informationsgehalt genau erfassen und bei Bedarf die zugeordnete Schaltfunktion (sofern eine solche gegeben ist) auslösen. Diese Schaltfunktion, wie sie in Fig. 1 dargestellt ist, ist jedoch rein optional und muss nicht vorgesehen sein, vielmehr kann die Leuchtanzeige auch lediglich der Objektdarstellung und damit der Informationswiedergabe dienen.

Wird farbiges Licht eingekoppelt, so leuchtet das Objekt 3 entsprechend farbig. Alternativ zur Einkopplung farbigen Lichts ist es grundsätzlich auch denkbar, beide Kunststoffe 11, 12 mit demselben Farbdotierstoff einzufärben, ihre Transparenz respektive Durchsichtigkeit bleibt jedoch erhalten, so dass sich letztlich lediglich ein farbiges Kunststoff-Anzeigeelement 2 ergibt. Bei Einkopplung weißen Lichts leuchtet dann jedoch wiederum das Objekt 3 farbig.

Anstelle eines vollständigen Einschlusses ist auch ein nur teilweiser Einschluss des Objekts möglich.

## Patentansprüche

1. Leuchtanzeige zur Darstellung eines dreidimensionalen Objekts, umfassend ein das Objekt enthaltendes Anzeigeelement, in dem das dreidimensionale Objekt bei Einkopplung von Licht sichtbar wird, wobei
das dreidimensionale Objekt (3) aus einem das Licht zumindest teilweise reflektierenden ersten Kunststoff (11) besteht und teilweise oder vollständig von einem das Licht nicht reflektierenden zweiten Kunststoff (12) umschlossen ist, wobei beide Kunststoffe (11, 12) aus demselben Grundmaterial bestehen, **dadurch gekennzeichnet, dass** ein Grundmaterial zur Erzeugung des Reflexionsvermögens mit homogen verteilten Nanopartikeln dotiert ist.

2. Leuchtanzeige nach Anspruch 1,
**dadurch gekennzeichnet,**
**dass** das das Objekt (3) bildende Grundmaterial dotiert ist.

3. Leuchtanzeige nach Anspruch 1 oder 2,
**dadurch gekennzeichnet,**
**dass** als Grundmaterial PMMA oder PC verwendet ist.

4. Leuchtanzeige nach einem der vorangehenden Ansprüche,
**dadurch gekennzeichnet,**
**dass** die Kunststoffe eingefärbt sind.

5. Leuchtanzeige nach einem der vorangehenden Ansprüche,
**dadurch gekennzeichnet,**
**dass** wenigstens eine farbige Lichtquelle (4, 5) vorgesehen ist.

6. Leuchtanzeige nach Anspruch 5,
**dadurch gekennzeichnet,**
**dass** wenigstens zwei Lichtquellen (4, 5) vorgesehen sind, von denen eine weißes Licht und die andere farbiges Licht emittiert.

7. Leuchtanzeige nach einem der vorangehenden Ansprüche,
**dadurch gekennzeichnet,**
**dass** das Anzeigeelement (2) als kubischer Block ausgeführt ist, wobei das Licht an wenigstens einer Seite, insbesondere an zwei einander gegenüberliegenden Seiten (13, 14), eingekoppelt wird.

8. Leuchtanzeige nach einem der vorangehenden Ansprüche,
**dadurch gekennzeichnet,**
**dass** eine Einrichtung (10) zur Erfassung einer Annäherung an das oder einer Berührung des Anzeigeelements (2) und zur Auslösung einer zugeordneten Schaltfunktion vorgesehen ist.

## Claims

1. Illuminated display for displaying a three-dimensional object, which comprises a display element containing the object, in that the three-dimensional object is visible when light is coupled in, the three-dimensional object (3) consisting of a first plastics material (11) which reflects the light at least in part and being surrounded in part or completely by a second plastics material (12) which does not reflect the light, both plastics materials (11, 12) consisting of the same basic material, **characterised in that** a basic material is doped with uniformly distributed nanoparticles for generating the reflectance.

2. Illuminated display according to claim 1, **characterised in that** the basic material forming the object (3) is doped.

3. Illuminated display according to either claim 1 or claim 2, **characterised in that** PMMA or PC is used as the basic material.

4. Illuminated display according to any of the preceding claims, **characterised in that** the plastics materials are coloured.

5. Illuminated display according to any of the preceding claims, **characterised in that** at least one coloured light source (4, 5) is provided.

6. Illuminated display according to claim 5, **characterised in that** at least two light sources (4, 5) are provided, one of which emits white light and the other of which emits coloured light.

7. Illuminated display according to any of the preceding claims, **characterised in that** the display element (2) is constructed as a cubic block, light being coupled in on at least one side of the cubic block, more particularly on two opposing sides (13, 14).

8. Illuminated display according to any of the preceding claims, **characterised in that** a device (10) is provided for detecting an approach towards or a contact with the display element (2) and for triggering an associated switching function.

## Revendications

1. Affichage lumineux servant à représenter un objet tridimensionnel, comprenant un élément d'affichage contenant l'objet, dans lequel on peut voir l'objet tridimensionnel en injectant de la lumière, où l'objet tridimensionnel (3) est constitué d'un premier plastique (11) réfléchissant au moins en partie la lumière et est entouré en partie ou en totalité d'un deuxième plastique (12) ne réfléchissant pas la lumière, où les deux plastiques (11, 12) sont constitués du même matériau de base, **caractérisé en ce qu'**un matériau de base est dopé avec des nanoparticules réparties de manière homogène afin de produire la capacité de réflexion.

2. Affichage lumineux selon la revendication 1,
**caractérisé en ce**
**que** le matériau de base formant l'objet (3) est dopé.

3. Affichage lumineux selon la revendication 1 ou 2,
**caractérisé en ce**
**qu'**on utilise comme matériau de base du polyméthylméthacrylate (PMMA) ou du chlorure de polyvinyle (PVC).

4. Affichage lumineux selon l'une quelconque des revendications précédentes,
**caractérisé en ce**
**que** les plastiques sont colorés.

5. Affichage lumineux selon l'une quelconque des revendications précédentes,
**caractérisé en ce**
**qu'**est prévue au moins une source de lumière (4, 5) colorée.

6. Affichage lumineux selon la revendication 5,
**caractérisé en ce**
**qu'**au moins deux sources de lumière (4, 5) sont prévues, l'une d'elles émettant une lumière blanche et l'autre émettant une lumière colorée.

7. Affichage lumineux selon l'une quelconque des revendications précédentes,
**caractérisé en ce**
**que** l'élément d'affichage (2) est réalisé sous la forme d'un bloc cubique, où la lumière est injectée au niveau d'au moins un côté, en particulier au niveau de deux côtés (13, 14) se faisant face.

8. Affichage lumineux selon l'une quelconque des revendications précédentes,
**caractérisé en ce**
**qu'**un dispositif (10) est prévu pour détecter un rapprochement de l'élément d'affichage (2) ou un contact avec ce dernier et pour déclencher une fonction de commutation associée.
